# EUROPEAN PATENT APPLICATION

(11) **EP 2 075 444 A1**
(43) Date of publication of application: **01.07.2009**
(21) Application number: 08172913.9
(22) Date of filing: 24.12.2008
(51) Int. Cl.: F02D 41/04

(54) **Controller for internal combustion engine and method for controlling internal combustion engine**

(30) Priority: 25.12.2007 JP 2007332703
(71) Applicant: Toyota Jidosha Kabushiki Kaisha, Toyota-shi, Aichi-ken 471-8571 (JP)
(72) Inventor: Terada, Yasuyuki, Aichi-ken 471-8571 (JP)
(74) Representative: Intes, Didier Gérard André

(57) **Abstract**

When a stop condition of an engine (1) is satisfied by turning off an ignition switch (49), or by releasing depression of an accelerator pedal (43) and depressing a brake pedal (51), the supply of fuel from a fuel injection nozzle (16) to a combustion chamber (8) is stopped when the pressure in an intake passage (9a) becomes below a predetermined value after a throttle valve (14) and an EGR valve (42a) have been fully closed.

## Description

### BACKGROUND OF THE INVENTION

### 1. Field of the Invention

This invention relates to a controller for an internal combustion engine and a method for controlling the internal combustion engine, in particular, a controller and a control method for an internal combustion engine, such as a diesel engine mounted on a vehicle, that perform control to stop the internal combustion engine if a predetermined condition is satisfied.

### 2. Description of the Related Art

Control to start and stop an internal combustion engine that is mounted on a vehicle such as an automobile is performed principally based on an on/off operation of an ignition switch or a main switch by a driver.

Meanwhile, recently, in order to reduce exhaust gas and improve fuel efficiency, control that stops fuel supply to the internal combustion engine, or actively or automatically stops the internal combustion engine is performed, when the drive force from the internal combustion engine is not necessary.

In the latter control that automatically stops the internal combustion engine, which may be referred to as eco-run control, if a predetermined stop condition of the internal combustion engine is satisfied, for example, when a brake pedal is depressed while an accelerator pedal is released, the internal combustion engine is stopped by stopping fuel supply to the combustion chamber in the internal combustion engine. In the case where the fuel supply to the internal combustion engine is stopped to automatically stop the internal combustion engine, because the engine has an inertia force, the crankshaft of the internal combustion engine is rotated several times or by several degrees by inertia after the fuel injection stops.

In this case, even after the fuel supply is stopped, air is inducted into the combustion chamber in the internal combustion engine and the inducted air is compressed by a piston. Such compression and expansion of the inducted air may generate torque fluctuation. Therefore, the torque fluctuation may generate vibration in the internal combustion engine, and may give an uncomfortable feeling to the driver.

Japanese Patent Application Publication No. 2000-240483 (JP-A-2000-240483) describes a controller for an internal combustion engine that stops fuel supply while throttling intake air to stop the internal combustion engine when a stop condition other than the driver's stop operation is satisfied.

According to this controller for the internal combustion engine, when the stop condition of the internal combustion engine is satisfied, control is performed such that fuel supply, such as fuel injection, is stopped simultaneously with or immediately after fully closing the intake air control valve provided in the intake pipe. By doing this, generation of vibration is suppressed or reduced when the internal combustion engine stops.

However, because the above-described controller for the internal combustion engine stops fuel supply simultaneously with or immediately after fully closing the intake air control valve, the fuel supply may be stopped before the pressure in the intake pipe is sufficiently reduced. Therefore, torque fluctuation in the internal combustion engine is not sufficiently reduced due to the compression of intake air and the subsequent expansion. Accordingly, the vibration in the internal combustion engine may not be suppressed or reduced sufficiently, and thus the driver may still be given uncomfortable feelings.

In particular, in a diesel engine, during idling, the pressure in the intake pipe (which is equivalent to the atmospheric pressure) is higher and compression ratio is higher compared to the gasoline engine. Therefore, it takes long time to sufficiently reduce the pressure in the intake pipe after the intake air control valve is fully closed when a predetermined stop condition is satisfied.

Accordingly, the fuel supply may be stopped before the pressure in the intake pipe is sufficiently reduced after the intake air control valve has been fully closed. As a result, vibration in the internal combustion engine may not be sufficiently reduced, and the driver may still be given uncomfortable feelings.

In order to sufficiently reduce the vibration in the internal combustion engine, it may be considered to extend the period from when the intake air control valve is fully closed to when the fuel supply is stopped. In this case, it may take extremely long time before the internal combustion engine stops completely, and this may result in generation of unburned gas and so generation of hydrocarbon (HC), etc. Accordingly, it is not an effective way to simply extend the time period from when the intake air control valve is fully closed to when the fuel supply is stopped.

### SUMMARY OF THE INVENTION

The present invention provides a controller for an internal combustion engine and a method for controlling an internal combustion engine that reduce vibration in the internal combustion engine when the internal combustion engine is stopped, and prevent the driver from feeling uncomfortable.

A first aspect of the present invention provides a controller for an internal combustion engine that includes determining means for determining whether a predetermined stop condition is satisfied; an intake pipe having an intake passage to supply intake air to a combustion chamber in the internal combustion engine; an intake air control valve that is provided in the intake pipe to open and close the intake passage and controls an amount of intake air supplied to the combustion chamber; and fuel supply means for supplying fuel into the combustion chamber. The controller further includes driving means for fully closing the intake air control valve when the determining means determines that the stop condition is satisfied; pressure detection means for detecting pressure in the intake passage between the intake air control valve and the combustion chamber; and fuel supply stop means for stopping supply of fuel by the fuel supply means when the pressure detected by the pressure detection means becomes below a predetermined value after the driving means has fully closed the intake air control valve.

According to the first aspect of the present invention, if the stop condition of the internal combustion engine is satisfied, the supply of fuel is stopped when the pressure in the intake passage becomes below the predetermined value after the intake air control valve is fully closed. As a result, the intake air supplied to the internal combustion engine is suppressed or reduced in the case where the internal combustion engine is rotated by inertia force after the fuel supply stops. Thus, the torque fluctuation in the internal combustion engine due to the compression or expansion of the intake air is prevented.

Therefore, the generation of vibration in the internal combustion engine is suppressed or reduced, and the driver is prevented from feeling uncomfortable. In particular, the automatic stop of the internal combustion engine by eco-run control, etc. is not an engine stop operation intended by the driver. Accordingly, when the automatic stop and start are frequently repeated, the driver is securely prevented from feeling uncomfortable by suppressing or reducing the vibration at the time of automatic stop of the internal combustion engine.

In addition, because the fuel supply stops when the pressure in the intake passage becomes below the predetermined value, the negative pressure in the intake passage is prevented from increasing more than necessary. Accordingly, the generation of unburned gas is prevented and the generation of HC (hydrocarbon) is prevented.

The controller may further includes an exhaust pipe having an exhaust passage to discharge exhaust gas from the combustion chamber; an EGR pipe that branches off from the exhaust pipe and is connected to the intake pipe, and has an EGR passage; and an EGR valve that is provided in the EGR pipe to be openable and closable to connect and disconnect between the EGR passage and the intake passage. The intake air control valve may be provided upstream of the connection point between the EGR pipe and the intake pipe. The driving means may fully close the EGR valve when the determining means determines that the stop condition is satisfied, and the fuel supply stop means may stop supplying fuel when the pressure detected by the pressure detection means becomes below the predetermined value after the driving means has fully closed the EGR valve.

According to this construction, because the fuel supply stops when the intake air control valve and the EGR valve are fully closed and the pressure in the intake passage is below the predetermined value, the generation of vibration in the internal combustion is suppressed or reduced, and the driver is prevented from feeling uncomfortable.

Further, because the fuel supply stops when the pressure in the intake passage becomes below the predetermined value, the negative pressure in the intake passage is prevented from increasing more than necessary. As a result, the EGR valve is prevented from being separated from the EGR pipe by the influence of the negative pressure, and the EGR gas is prevented from flowing into the combustion chamber in the internal combustion engine through the gap between the EGR pipe and the EGR valve.

A second aspect of the present invention provides a method for controlling an internal combustion engine. In the method, it is determined whether a predetermined stop condition is satisfied. An intake air control valve provided in an intake pipe to open and close an intake passage formed in the intake pipe is fully closed, when it is determined that the predetermined stop condition is satisfied. Pressure in the intake passage between the intake air control valve and a combustion chamber is detected. Then, supply of fuel to the combustion chamber is stopped when the detected pressure in the intake passage becomes below a predetermined value after the intake air control valve is fully closed.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a diagram showing an overall construction of a diesel engine in a controller for an internal combustion engine according to an embodiment of the present invention;
FIG. 2 is a flowchart of a fuel supply stop control when the engine is stopped in the controller for the internal combustion engine according to the embodiment of the present invention; and
FIGs. 3A- 3E are timing diagrams during the fuel supply stop control in the controller for the internal combustion engine according to the embodiment of the present invention.

### DETAILED DESCRIPTION OF EMBODIMENTS

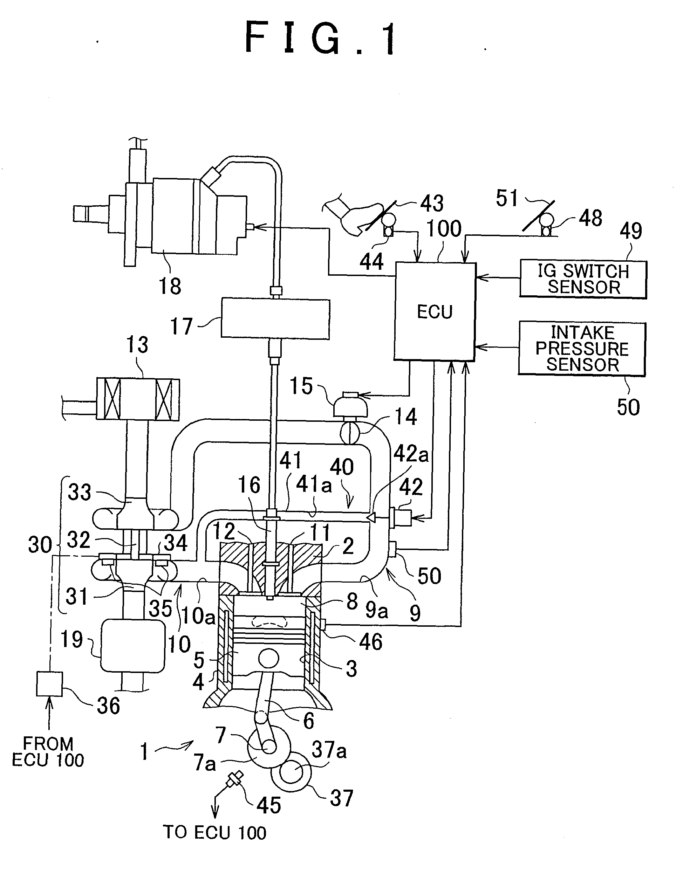

Hereinafter, a controller for an internal combustion engine according to an embodiment of the present invention will be described with reference to the drawings. FIGs. 1 to 3 are views illustrating the controller for the internal combustion engine according to the embodiment of the present invention, and the invention is applied to a diesel engine as an example.

First, the construction will be described. In FIG. 1, a common rail diesel engine (hereinafter, simply referred to as an "engine") 1, serving as an internal combustion engine mounted on a vehicle, such as an automobile, includes a cylinder head 2 and a cylinder block 4 having multiple cylinders 3. Although not shown in FIG. 1, there are at least two cylinders 3.

A piston 5 is reciprocatably fitted in each cylinder 3, and each piston 5 is connected to a crankshaft 7, which is an output shaft of the engine 1, via a connecting rod 6. The reciprocating motion of each piston 5 is converted into rotational motion by the connecting rod 6, and is transmitted to the crankshaft 7. The rotation of the crankshaft 7 is transmitted to the wheels of the vehicle via a transmission, etc. (not shown).

In the engine 1, each cylinder 3 includes a combustion chamber 8. Each combustion chamber 8 is connected to an intake pipe 9 and an exhaust pipe 10. An intake passage 9a that supply intake air to the combustion chamber 8 of the engine 1 is formed in the intake pipe 9. An exhaust passage 10a that conducts combustion gas discharged from the combustion chamber 8 is formed in the exhaust pipe 10.

In cylinder head 2, an intake valve 11 and an exhaust valve 12 are provided for each cylinder 3. Each of the intake valve 11 and the exhaust valve 12 reciprocates in conjunction with the rotation of the crankshaft 7 to open and close communication between each of the intake passage 9a and the exhaust passage 10a and the combustion chamber 8.

Moreover, the intake pipe 9 has an air cleaner 13 and a throttle valve 14. In this embodiment, principally, during the intake stroke of the engine 1, when the piston 5 moves downward in the state where the exhaust valve 12 is closed and the intake valve 11 is opened, the pressure in the cylinder 3 becomes lower than the atmospheric pressure (i.e., negative pressure is created), and air outside the engine 1 is inducted into the combustion chamber 8 through the intake passage 9a.

The throttle valve 14 is pivotably supported in the intake pipe 9. The throttle valve 14 is driven by an actuator 15, which serves as a driving means such as a step motor. The amount of air flowing through the intake passage 9a (intake air amount) changes depending upon the opening (opening degree) of the throttle valve 14. In other words, the throttle valve 14 is disposed in the intake pipe 9 to open and close the intake passage, and controls the intake air amount supplied to the combustion chamber 8.

A fuel injection nozzle 16, which serves as a fuel injection means for injecting fuel into each combustion chamber 8, is attached to the cylinder head 2. Each injection nozzle 16 has a solenoid valve (not shown). The solenoid valve is connected to a common rail 17, which serves as an accumulator. While the solenoid valve opens, the fuel in the common rail 17 is injected from the fuel injection nozzle 16 into the corresponding combustion chamber 8.

In the common rail 17, relatively high pressure corresponding to the fuel injection pressure is accumulated. In order to accumulate the pressure, the common rail 17 is connected to a supply pump 18, which serves as a fuel pump.

The supply pump 18 draws fuel from a fuel tank (not shown) and reciprocates a plunger using a cam that moves synchronously with the rotation of the engine 1 to supply fuel the pressure of which is increased to a predetermined pressure to the common rail 17.

Then, the fuel is injected from the fuel injection nozzle 16 toward the high temperature high pressure intake air that is inducted into the combustion chamber 8 in the cylinder 3 through the intake passage 9a and is compressed by the piston 5. The injected fuel is spontaneously ignited and combusts. The combustion gas generated thereby reciprocates the piston 5, thereby rotating the crankshaft 7. Thus, the drive force (output torque) from the engine 1 is obtained. Then, the combustion gas is discharged to the outside of the engine 1 through the catalyst 19 provided in the exhaust pipe 10.

Further, the engine 1 has a variable nozzle turbocharger 30, which serves as a forced air induction device. The variable nozzle turbocharger 30 includes a turbine wheel 31 that is rotated by the exhaust gas flowing through the exhaust passage 10a, and a compressor wheel 33 that is disposed in the intake pipe 9 and is connected to the turbine wheel 31 via a rotor shaft 32.

In the variable nozzle turbocharger 30, the turbine wheel 31 is rotated by the exhaust gas blown to the turbine wheel 31, and the rotation of the turbine wheel 31 is transmitted to the compressor wheel 33 via the rotor shaft 32.

As a result, in the engine 1, not only is air inducted into the combustion chamber 8 by the negative pressure created in the combustion chamber 8 by the movement of the piston 5, the air is forcibly inducted into the combustion chamber 8 by the rotation of the compressor wheel 33. In other words, the air pressure is boosted. As described above, the packing efficiency of the air fed to the combustion chamber 8 is increased.

Further, in the variable nozzle turbocharger 30, an exhaust gas flow path is formed along the rotation direction of the turbine wheel 31 so as to circumscribe the outer circumference of the turbine wheel 31. The exhaust gas passes through the exhaust gas flow path, and is directed to a shaft line of the turbine wheel 31. In the exhaust gas flow path, a variable nozzle mechanism is provided in which multiple nozzle vanes 35 are pivotably provided on a ring-shaped nozzle back plate 34.

The variable nozzle mechanism opens and closes all of the nozzle vanes 35 synchronously with each other by the operation of an actuator 36, such as a DC motor, to change the area of the exhaust gas flow path through which the exhaust gas flows, thereby varying the flow rate of the exhaust gas blown to the turbine wheel 31.

By thus varying the flow rate of the exhaust gas, the rotating speed of the turbine wheel 31 is adjusted, and accordingly, the intake air is supplied to the combustion chamber 8 at a desired boost pressure.

The engine 1 further includes an EGR device 40 that recirculates a portion of the exhaust gas flowing through the exhaust passage 10a into the intake passage 9a. The EGR device 40 increases a proportion of inert gas in the air-fuel mixture by mixing the exhaust gas (EGR gas) with the intake air by recirculation, thereby reducing the maximum combustion temperature. Thus, the EGR device 40 reduces generation of nitrogen oxide (NOx), which is an air pollutant.

The EGR device 40 includes an EGR pipe 41 and an EGR valve 42a. The EGR pipe 41 connects between the exhaust passage 10a and a portion of the intake passage 9a downstream of the throttle valve 14. The EGR pipe 41 branches off from the exhaust pipe 10 and is connected to the intake pipe 9. An EGR passage 41a is formed in the EGR pipe 41.

The EGR valve 42a is provided in the EGR passage 41a, for example, at a connection point between the EGR pipe 41 and the intake pipe 9. The EGR valve 42a is provided in the EGR pipe 41 so as to be openable and closable, and is driven by an actuator 42, which is a driving means like a step motor, to open and close communication (i.e., connect and disconnect) between the EGR passage 41a and the intake passage 9a. The flow volume of the EGR gas flowing through the EGR passage 41a varies depending upon the opening (opening degree) of the EGR valve 42a.

Further, an electric control unit (hereinafter, referred to as an ECU) 100 is provided to control the engine 1 constructed as described above. The ECU 100 includes a CPU (Central Processing Unit), a ROM (Read Only Memory), a RAM (Random Access Memory), an input/output interface, and the like. The ECU 100 performs fuel injection control of the engine 1, including fuel injection amount control and fuel injection timing control, based on fuel injection program stored in the ROM. The ECU 100 also performs fuel supply stop control when the engine 1 is stopped based on the fuel supply stop control program stored in the ROM. Details of the fuel supply stop control will be described later.

In connection with the fuel injection amount control, the ECU 100 controls fuel injection pressure in the common rail 17 and a boost pressure of the variable nozzle turbocharger 30. The ECU 100 further controls the opening degree of the EGR valve 42a and the opening degree of the throttle valve 14.

The ECU 100 receives various detection signals, including: a detection signal from an accelerator pedal position sensor 44 that detects an amount of depression of an accelerator pedal 43 depressed by a driver of the vehicle (accelerator pedal depression amount); a detection signal from a crank position sensor 45 that outputs a signal corresponding to the rotation of the crankshaft 7; and a detection signal from a water temperature sensor 46 that detects the temperature of cooling water in the engine 1. The ECU 100 adjusts the output torque from the engine 1 through the fuel injection amount control.

The fuel injection amount control is accomplished by controlling the operation of the fuel injection nozzle 16 based on the fuel injection amount command value Qfin calculated from the accelerator pedal depression amount ACCP, the engine speed NE, and the like.

Note that the accelerator pedal depression amount ACCP is determined based on the detection signal from the accelerator pedal position sensor 44, and the engine speed NE is determined based on the detection signal from the crank position sensor 45.

As described above, the ECU 100 controls the operation of the fuel injection nozzle 16 to inject the amount of fuel corresponding to the fuel injection amount command value Qfin into each combustion chamber 8, thereby adjusting the output torque from the engine 1.

The accelerator pedal depression amount ACCP used in the calculation of the fuel injection amount command value Qfin is a parameter indicating a vehicle travel request by the driver, in other words, an output request to the engine 1. Therefore, by controlling the fuel injection amount based on the fuel injection amount command value Qfin, the output torque from the engine 1 is adjusted such that the output torque requested by the driver is obtained.

The ECU 100 further controls the discharge amount of the supply pump 18 to control the fuel pressure in the common rail 17, i.e., the injection pressure. As the injection pressure increases, atomization of the fuel injected from the fuel injection nozzle 16 is enhanced.

The ECU 100 also adjusts an injection timing in accordance with the injection amount to optimize the combustion state in the engine 1. As the injection timing is advanced, the start of combustion is likely to occur earlier. The ECU 100 further controls the boost pressure of the variable nozzle turbocharger 30 by adjusting the opening degree VNT of the nozzle vane 36 by driving the actuator 36, so as to optimize the combustion state in the engine 1.

A ring gear 7a is provided on the crankshaft 7. The ring gear 7a meshes with a pinion gear 37a of a starter motor 37 that operates when the engine 1 starts. The engine 1 is cranked or started by the rotation of the ring gear 7a caused by the operation of the starter motor 37.

Meanwhile, the ECU 100 is connected to a brake sensor 48, an ignition switch sensor (hereinafter, simply referred to as an IG switch sensor) 49 and an intake pressure sensor 50, which may serve as a pressure detection means. The brake sensor 48 detects the depression of a brake pedal 51. When the brake pedal 51 is depressed, the brake sensor 48 outputs an ON-signal to the ECU 100. On the contrary, when the brake pedal 51 is released from depression, the brake sensor 48 outputs an OFF-signal to the ECU 100.

The IG switch sensor 49 outputs an ON-signal to the ECU 100, when the ignition switch is turned on at the time of start-up of the vehicle. On the other hand, when the ignition switch is turned off at the time of stop of the vehicle, the IG switch sensor 49 outputs an OFF-signal to the ECU 100. The intake pressure sensor 50 is disposed in the intake passage 9a between the combustion chamber 8 and the throttle valve 14 and the EGR valve 42a, i.e., downstream of the throttle valve 14 and the EGR valve 42a. The intake pressure sensor 50 detects the pressure in the intake passage 9a and outputs an intake pressure signal Qf to the ECU 100.

In this embodiment, the ECU 100 determines whether a predetermined stop condition of the engine 1 intended by the driver is satisfied based on the detection signal from the IG switch sensor 49. Upon receiving the OFF-signal from the IG switch sensor 49, the ECU 100 determines that the stop condition of the engine 1 is satisfied, and stops the engine 1.

The ECU 100 also determines whether a predetermined stop condition of the engine 1 that is not intended by the driver is satisfied based on the detection signals from the accelerator pedal position sensor 44 and the brake sensor 48. If the ECU 100 receives an OFF-signal from the accelerator pedal position sensor 44 indicating that the accelerator pedal 43 is released from depression, and an ON-signal from the brake sensor 48 indicating that the brake pedal 51 is depressed, the ECU 100 determines that the engine stop condition is satisfied, and performs idle stop (i.e., eco-run control). In this embodiment, the ECU 100 may be regarded as the determining means in the claimed invention.

When the stop condition of the engine 1 is satisfied, the ECU 100 drives the actuator 15 to fully close the throttle valve 14, and at about the same time drives the actuator 42 to fully close the EGR valve 42a. After that, when the intake pressure sensor 50 detects that the pressure in the intake passage 9a decreases below a predetermined pressure, the ECU 100 closes the solenoid valve to stop the injection of fuel from the common rail 17 through the fuel injection nozzle 16, thereby stopping the engine 1. In this embodiment, the ECU 100 may also be regarded as the fuel supply stop means in the claimed invention.

Upon receiving the ON-signal from the IG switch sensor 49, the ECU 100 determines that an operation start condition of the engine 1 is satisfied, and drives the starter motor 37 to crank or start the engine 1.

Further, when the ECU 100 receives an OFF-signal from the brake sensor 48 indicating that the brake pedal 51 is released from depression, and an ON-signal from the accelerator pedal position sensor 44 indicating that the accelerator pedal is depressed, the ECU 100 actuates or drives the starter motor 37 to crank or start the engine 1, which has been stopped by idle stop control.

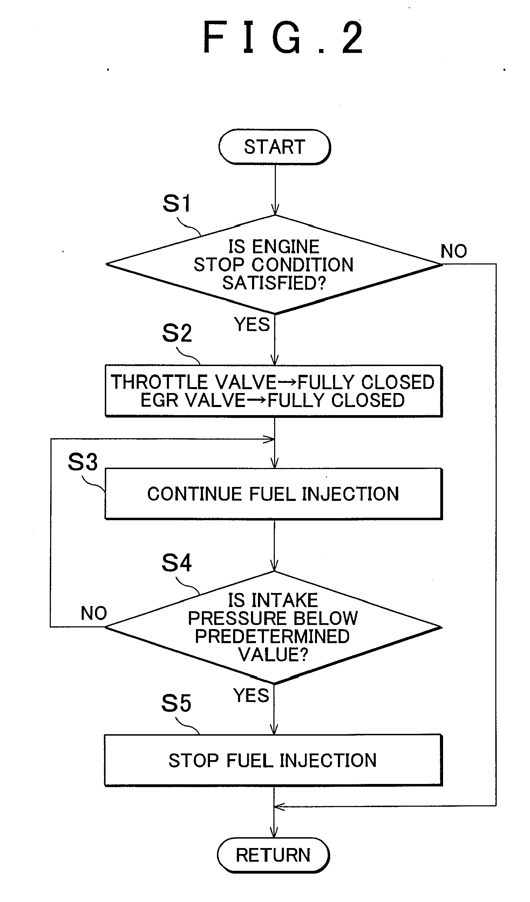

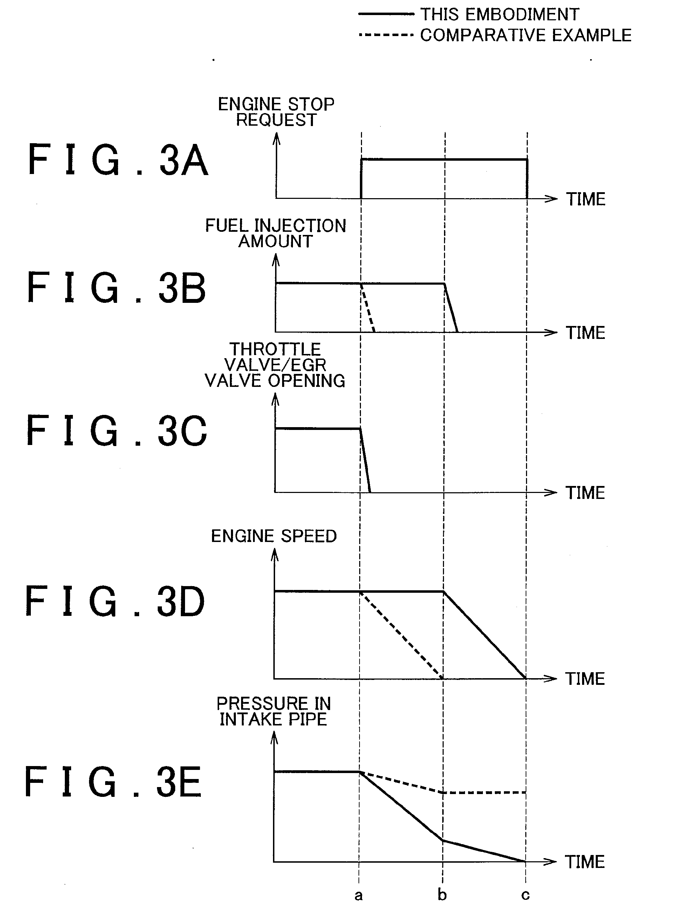

Next, the fuel supply stop control when the engine 1 is stopped will be described with reference to the flowchart shown in FIG. 2 and the timing diagrams shown in FIGs. 3A to 3E. The control according to the flowchart shown in FIG. 2 is fuel supply stop control program stored in the ROM in the ECU 100, and the CPU executes the fuel supply stop control program. The solid line shown in FIG. 3 indicates the timing of events during the fuel supply stop control of this embodiment, and the dashed line indicates the timing of events during the fuel supply stop control of a comparative example.

In FIG. 2, the CPU in the ECU 100 determines whether a stop condition of the engine 1 is satisfied (step S1). More specifically, if the ECU 100 receives an OFF-signal from the IG switch sensor 49, it is determined that the stop condition of the engine 1 is satisfied, because such an OFF-signal indicates that a stop operation of the engine 1 intended by the driver will be preformed.

In addition, if the ECU 100 receives an OFF-signal from the accelerator pedal position sensor 44 and an ON-signal from the brake sensor 48, it is determined that the stop condition of the engine 1 is satisfied, because such signals indicate that a stop operation of the engine 1 that is not intended by the driver (i.e., eco-run control) will be performed.

If the stop condition of the engine 1 is satisfied, the ECU 100 drives the actuator 15 to fully close the throttle valve 14 and the actuator 42 to fully close the EGR valve 42a (step S2), and continues fuel injection into the combustion chamber 8 from the fuel injection nozzle 16 (step S3) to operate the engine 1 and thus to rotate the crankshaft 7.

Here, as shown in FIG. 3A, when the engine stop condition is satisfied at the time point a, the ECU 100 sets an engine stop request flag, for example. In the comparative example, as shown in FIGs. 3B and 3C, the throttle valve is fully closed and the fuel injection is stopped, when the engine stop request flag is set. Therefore, the fuel supply is stopped before the pressure in the intake passage 9a is sufficiently reduced. Accordingly, as shown in FIG. 3E, because fuel does not combust, the pressure in the intake passage 9a does not decrease, and so the torque fluctuation in the engine 1 is not sufficiently reduced due to the compression of intake air and the subsequent expansion. As a result, as shown in FIG. 3D, the engine 1 stops before the pressure in the intake passage 9a is not sufficiently reduced.

In particular, during idling, the pressure in the intake passage 9a in the diesel engine (which is equivalent to the atmospheric pressure) is higher compared to the gasoline engine. In addition, a compression ratio of the diesel engine is higher than that of the gasoline engine. Therefore, after the stop condition of the engine 1 is satisfied, the period from when the throttle valve 14 is fully closed to when the pressure in the intake passage 9a is sufficiently reduced is likely to be longer in the diesel engine. Accordingly, the vibration in the engine 1 is not sufficiently suppressed or reduced, and so the driver may feel uncomfortable.

In this embodiment, after the process in step S3, the CPU in the ECU 100 determines whether the intake pressure in the intake passage 9a is below a predetermined value, for example, below the absolute pressure of 50kPa, based on the detection information sent from the intake pressure sensor 50 (step S4).

Incidentally, here the absolute pressure of 50kPa is set to the predetermined value of the intake pressure, so as to use the lower limit pressure at which the fuel (for example 6mm³/St) can be completely burned during idling as the pressure condition in the intake passage.

When the CPU in the ECU 100 determines in step S4 that the intake pressure in the intake passage 9a is equal to or higher than the predetermined value, the control returns to step S3. On the other hand, when the CPU in the ECU 100 determines that the intake pressure in the intake passage 9a is below the predetermined value, the fuel injection is stopped (step S5) and then the fuel supply stop control ends.

In other words, in this embodiment, after the throttle valve 14 and the EGR valve 42a are fully closed, the fuel injection is stopped at time point b when the pressure in the intake passage 9a decreases to the lower limit pressure at which the fuel can be completely burned during idling, as shown in FIGs. 3B and 3E. As a result, because the fuel continues to combust until the fuel injection is stopped, this embodiment reduces the pressure in the intake passage 9a more than the comparative example does. Accordingly, the rotation of engine 1 is stopped after the torque fluctuation in the engine 1 caused by the compression of the intake air and the subsequent expansion is sufficiently reduced, as shown in FIG. 3D.

As described above, in this embodiment, if the stop condition of engine 1 is satisfied, the supply of fuel is stopped when the pressure in the intake passage 9a becomes below the predetermined value after the throttle valve 14 and the EGR valve 42a are fully closed. Therefore, intake air supplied to the engine 1 can be reduced during the period in which the engine 1 is rotated by inertia force after the fuel supply is stopped. As a result, the torque fluctuation in the engine 1 caused by the compression or expansion of the intake air can be prevented.

Accordingly, the generation of vibration in the engine 1 can be suppressed or reduced, and the driver may be prevented from feeling uncomfortable. In this embodiment, as shown in FIG. 3D, the time point at which the engine 1 is completely stopped is slightly delayed from the time point b to time point c. However, automatic stop of the engine 1 by the eco-run control, etc. is not an engine stop operation intended by the driver. Therefore, if the vibration is suppressed or reduced during the automatic stop of the engine 1, the driver is securely prevented from feeling uncomfortable in cases where the automatic stop and automatic start are frequently repeated.

Further, in this embodiment, because the supply of fuel stops when the pressure in the intake passage 9a becomes below the predetermined value, the negative pressure in the intake passage 9a is prevented from increasing more than necessary. In other words, because the supply of fuel is stopped before the negative pressure in the intake passage 9a increases more than necessary, generation of unburned gas is prevented and thus generation of HC (hydrocarbon) is prevented.

In addition, in a case where the ignition switch is turned off, the supply of fuel is stopped when the pressure in the intake passage 9a becomes below the predetermined value. Thus, the supply of fuel stops before the pressure in the intake passage 9a becomes extremely low. Therefore, the duration of time until the engine 1 stops is prevented from being long more than necessary. As a result, the driver is prevented from being given uncomfortable feelings by the engine 1 that keeps operating or does not stop while the driver intends to stop the engine 1.

Furthermore, in this embodiment, if the predetermined stop condition is satisfied, because the EGR valve 42a is fully closed in addition to the throttle valve 14, the decrease in the pressure in the intake passage 9a is not impeded the communication between the EGR passage 41a and the intake passage 9a. Accordingly, the vibration in the engine 1 is further suppressed or reduced, and the driver is securely prevented from feeling uncomfortable.

Further, because the supply of fuel is stopped when the pressure in the intake passage 9a becomes below the predetermined value, the negative pressure in the intake passage 9a is prevented from increasing more than necessary. Thus, the EGR valve 42a is prevented from being separated from the EGR pipe 41 by the influence of the negative pressure, and the EGR gas is prevented from flowing into the combustion chamber in the engine 1 through the gap between the EGR pipe 41 and the EGR valve 42a.

Note that, while, in this embodiment, the present invention is applied to the diesel engine, application to a gasoline engine having the EGR device 40 can achieve similar effects. Further, application to the gasoline engine without the EGR device 40 can achieve similar effects.

While some embodiments of the invention have been illustrated above, it is to be understood that the invention is not limited to details of the illustrated embodiments, but may be embodied with various changes, modifications or improvements, which may occur to those skilled in the art, without departing from the spirit and scope of the invention.

As described above, the controller for the internal combustion engine according to the present invention achieves the effects in which the vibration in the internal combustion engine is suppressed or reduced, and the driver is prevented from feeling uncomfortable. The controller of the present invention is useful as a controller, etc. for an internal combustion engine that performs control to stop the internal combustion engine such as a diesel engine mounted on a vehicle if a predetermined condition is satisfied.

## Claims

1. A controller for an internal combustion engine (1) that includes determining means (100) for determining whether a predetermined stop condition is satisfied; an intake pipe (9) having an intake passage (9a) to supply intake air to a combustion chamber (8) in the internal combustion engine; an intake air control valve (14) that is provided in the intake pipe (9) to open and close the intake passage (9a) and controls an amount of intake air to be supplied to the combustion chamber; and fuel supply means that supplies fuel into the combustion chamber, **characterized by** comprising:
driving means (15) for fully closing the intake air control valve (14) when the determining means determines that the stop condition is satisfied;
pressure detection means (50) for detecting the pressure in the intake passage (9a) between the intake air control valve (14) and the combustion chamber (8); and
fuel supply stop means (100) for stopping supply of fuel by the fuel supply means when the pressure detected by the pressure detection means becomes below a predetermined value after the driving means (15) has fully closed the intake air control valve (14).

2. The controller according to claim 1, further comprising:
an exhaust pipe (10) having an exhaust passage (10a) to discharge exhaust gas from the combustion chamber (8) ;
an EGR pipe (41) that branches off from the exhaust pipe (10) and is connected to the intake pipe (9), the EGR pipe (41) having an EGR passage (41 a) ; and
an EGR valve (42a) that is provided in the EGR pipe (41) to be openable and closable to connect and disconnect communication between the EGR passage (41a) and the intake passage (9a),
wherein the intake air control valve (14) is provided upstream of the connection point between the EGR pipe (41) and the intake pipe (9),
the driving means (42) fully closes the EGR valve (42a) when the determining means determines that the stop condition is satisfied, and
the fuel supply stop means stops (100) supplying fuel when the pressure detected by the pressure detection means becomes below the predetermined value after the driving means (42) has fully closed the EGR valve (42a).

3. The controller according to claim 2, wherein the intake air control valve (14) and the EGR valve (42a) are fully closed at substantially the same time.

4. The controller according to any one of claims 1 to 3, wherein the predetermined value is the absolute pressure of 50kPa.

5. The controller according to any one of claims 1 to 4, wherein the determining means determines that the predetermined stop condition is satisfied when an ignition switch is turned off.

6. The controller according to any one of claim 1 to 5, wherein the determining means determines that the predetermined stop condition is satisfied when an accelerator pedal (43) is released from depression and a brake pedal (51) is depressed.

7. The controller according to any one of claims 1 to 6, wherein the internal combustion engine (1) is a diesel engine.

8. A method for controlling an internal combustion engine (1), **characterized by** comprising the steps of:
determining whether a predetermined stop condition is satisfied;
fully closing an intake air control valve (14) provided in an intake pipe (9) to open and close an intake passage (9a) formed in the intake pipe (9), when it is determined that the predetermined stop condition is satisfied,
detecting pressure in the intake passage (9a) between the intake air control valve (14) and a combustion chamber (8);
stopping supplying fuel to the combustion chamber (8) when the detected pressure in the intake passage (9a) becomes below a predetermined value after the intake air control valve (14) is fully closed.

9. The method for controlling the internal combustion engine (1) according to claim 8, further comprising the steps of:
fully closing an EGR valve (42a) that is provided in an EGR pipe (41) to open and close communication between an EGR passage (41a) in the EGR pipe (41) and the intake passage (9a) when it is determined that the predetermined stop condition is satisfied.
